# EUROPEAN PATENT APPLICATION

(11) **EP 1 510 322 A1**
(43) Date of publication of application: **02.03.2005**
(21) Application number: 03447217.5
(22) Date of filing: 27.08.2003
(51) Int. Cl.: B29C 44/12, B29C 44/08

(54) **Method for manufacturing a composite trim part for the interior of an automotive vehicle**

(71) Applicant: RECTICEL, 1200 Brussels (BE)
(72) Inventor: De Winter, Hugo c/o RECTICEL, 9230 Wetteren (BE); Vanluchene, Yvan c/o RECTICEL, 9230 Wetteren (BE); Thienpont, Raphael, 53547 Hümmerich (DE); Laeis, Christoph, 53773 Hennef (DE)
(74) Representative: Van Reet, Joseph

(57) **Abstract**

For manufacturing the composite automotive trim part a flowable skin material (1) is applied onto a first mould surface (4), a flowable substrate material (2) is applied onto a second mould surface (7), the mould (5,8) is closed and a foamable material (3) is applied in the gap between the flexible skin (1) and the rigid substrate (2). Both the flexible skin and the rigid substrate can be manufactured by spraying a polyurethane reaction mixture. Advantages are that no positioning of the rigid substrate nor of the flexible skin is required and that especially the rigid substrate has not to be manufactured separately thus enabling to reduce the production costs and to increase the part quality. The sealing of the mould cavity for producing the foam layer is achieved by providing a sufficiently thick layer of flexible skin material in the zone of contact with the substrate. Installation and tool costs can be reduced by separating both mould halves and producing the skin and the substrate along different production lines.

## Description

The invention relates to a method for manufacturing a composite trim part which is arranged to be mounted in particular in an automotive vehicle to form a part of the interior thereof and which comprises a flexible skin, a rigid backing substrate and an intermediate layer, usually a foam layer, arranged between the flexible skin and the rigid substrate and adhering the flexible skin and the rigid substrate to one another.

A first aspect of the invention relates more particularly to a so-called direct backfoaming process. The method comprises then the steps of:
- providing a first mould half, having a first mould surface, and a second mould half, having a second mould surface, the first and second mould halves being arranged to cooperate with one another so that the first and second mould surfaces define a first mould cavity, and the first and second mould halves being movable with respect to one another to open and close said first mould cavity;
- applying at least one flowable skin material onto the first mould surface and allowing this flowable skin material to harden to produce the flexible skin on this first mould surface;
- applying said rigid substrate on the second mould surface;
- bringing both mould halves together to close the first mould cavity, with a gap remaining between the skin on the first mould surface and the substrate on the second mould surface;
- applying, either before and/or after having closed the first mould cavity, a curable material between the skin on the first mould surface and the substrate on the second mould surface, and allowing it to cure in the closed position of the first mould cavity to produce the foam layer in said gap, the curable material being in particular a foamable material which is allowed to foam in the closed position of the first mould cavity (11) to produce said foam layer (3); and
- opening the first mould cavity and removing the moulded trim part therefrom.

Direct backfoaming processes are already used to produce trim parts for automobiles. In the patent publications a direct backfoaming process is for example disclosed in WO 02/26461. In the known direct backfoaming processes, a liquid polyurethane reaction mixture is sprayed against the surface of a first half of a mould whilst a pre-manufactured rigid substrate is positioned onto the second mould half. The mould is then closed and a foamable polyurethane reaction mixture for producing a foam layer is injected in the gap between the skin and the rigid substrate. Instead of injecting this reaction mixture in this gap, it is also possible to pour the foamable reaction mixture onto the skin on the first mould half and to close the mould before the formation of the foam layer is completed, i.e. so that the foamable reaction mixture still foams after having closed the mould.

A first drawback of these known methods is that the rigid substrate has to be manufactured in advance, in separate moulds usually by another manufacturer. The rigid substrate is normally made of a thermoplastic material by injection processes requiring specific tools which are not used in the common backfoaming processes. Production of the rigid substrates by other manufacturers may cause all kind of problems such as fine-tuning mistakes, dimensional deviations due to the CAD exchange between the manufacturers, variations in the shape and dimensions of the substrates due to temperature and humidity influences during the required storage and transport, material shrinkage tolerances, and logistic problems. Separate manufacturing of the rigid substrates involves more process steps and therefore also increases the costs of the automotive interior trim parts.

A further drawback of the known direct backfoaming methods is that the pre-manufactured substrate has to be positioned accurately onto the second mould surface. Such a positioning requires sophisticated tool elements. The process is moreover quite time consuming whilst the positioning of the substrate on the second mould surface is still not optimal. The dimensions of the rigid substrate may vary for example within particular tolerances. This makes it difficult to assure that the rigid substrate fits each time perfectly against the second mould surface. Even the dimensional variations caused by environmental fluctuations (temperature, humidity) during storage may cause such problems. An imperfect positioning of the rigid substrate has first of all an effect on the thickness of the relatively small foam layer produced between the rigid substrate and the skin. This foam layer provides for a so-called soft touch so that a difference in foam thickness may have an effect on the touch of the trim part. Moreover, problems arise when two or more trim parts are to be mounted, in particular clipsed, next to one another in the interior of a car. When the rigid substrate, by means of which the trim part is fixed to the car body, is not in the correct position with respect to the skin, this will lead to unaesthetic transitions between the trim parts. Separate manufacturing of the rigid substrates therefore does not only increase the costs of the automotive interior trim parts but has also an adverse effect on the quality of the automotive interior trim.

An object of a first aspect of the present invention is therefore to provide a new direct backfoaming method wherein separate manufacturing of the rigid substrate and storage of the substrates is avoided and wherein further no separate positioning step is required to position the rigid substrate accurately onto the second mould surface whilst even enabling a more accurate and reliable positioning of the rigid substrate with respect to the flexible skin.

To this end, the method according to the invention is characterised in the first aspect of the invention in that the rigid substrate is produced on the second mould surface by applying at least one flowable substrate material onto the second mould surface and allowing this flowable substrate material to harden.

Since the rigid substrate is produced directly onto the second mould surface of the direct backfoaming mould, it is automatically accurately positioned with respect to the flexible skin which is produced on the mould surface of the other half of the direct backfoaming mould. Consequently no separate manufacturer is required to supply the different substrates for the various types of automotive trim parts. Moreover, the rigid substrates do not have to be stored so that dimensional variations as a result of temperature and humidity fluctuations are avoided. For each type of flexible skin or trim part, the appropriate rigid substrate is each time readily available since it is produced at the same time as the flexible skin. The installation costs can further be reduced since the second mould surface of the direct backfoaming mould is no longer only used for the direct backfoaming process but also for the production of the rigid substrate. All of these advantages enable to produce automotive trim parts at a lower cost and/or with a higher quality.

In the direct backfoaming processes which are used nowadays, the first and second mould halves are continuously connected to one another during the production process and are thus moved simultaneously through the different workstations. Such a process presents a number of drawbacks. First of all the total weight of the first and second mould halves, and of the mould carriers onto which these mould halves are mounted so that the moulds can be opened and closed, is so high that a robust installation or transfer line (f.e. power of transport motors, weight load of supporting frames, ...) is required to transport the moulds between the workstations. Moreover, notwithstanding the high weight, the moulds have to be positioned quite accurately in some of the workstations, for example in the workstation wherein the skin is sprayed by means of a spray robot. This requires rather complex positioning devices. Another drawback is that the entire installation is further also expensive in view of the fact that a relatively large number of complete moulds are needed to enable a continuous production. In practice, fifteen to twenty five moulds are for example used to complete a direct backfoaming process, the moulds being for example of five to seven different versions.

An object of a second aspect of the present invention is therefore to provide a new direct backfoaming method which enables to reduce the costs of the moulds and the installation in a continuous line for manufacturing interior trim parts.

To this end, the method according to the invention is characterised in the second aspect of the invention in that, for carrying out the different direct backfoaming steps, the first mould half is passed through a first circuit of successive workstations and the second mould half through a second circuit of successive workstations, the first and the second circuit comprising a chain of successive workstations which are common to the first and the second circuit and which comprise a first workstation, wherein the first and second mould halves are joined to one another, and a last workstation, which is situated downstream the first workstation and wherein the first and second mould halves are released from one another, the first circuit comprising further a first chain of successive workstations, through which the first mould half is passed separated from the second mould half, the foam layer being produced in said common chain of workstations whilst the flexible skin is produced in said first chain of workstations, the rigid substrate being either applied on the second mould surface in said common chain of workstations or the second circuit of successive workstations comprises, in addition to said common chain of workstations, at least one workstation wherein the rigid substrate is applied on the second mould surface.

Since it takes at least for the first mould halves a relatively long time before they have passed the line for producing the flexible skin, and since the first mould halves can now be passed through this line without the second mould halves, the installation can be made less robust and it is easier to position the first mould halves accurately in the different workstations. Moreover, especially when use is made of pre-manufactured rigid substrates, it takes much less time to apply the rigid substrates onto the second mould halves so that a much lower number of second mould halves is needed. This results in a considerable mould cost reduction, especially when pre-manufactured substrates are used since, in this case, only one workstation is required to position the pre-manufactured substrates.

In the direct backfoaming processes which are used nowadays, the first mould cavity of the backfoaming mould is sealed by means of an inflatable seal arranged behind the rigid substrate in a groove in the second mould half and by means of an upstanding cutting edge, opposite the inflatable seal, on the surface of the first mould half. In case of substrates which are somewhat compressible (for example is case of a mixture of natural fibres and polyurethane resin) and which do not show too much contour variations, the known sealing concept is effectively working. The substrate is compressed on the upstanding cutting edge and the mould is sealed hereby against foam and gas leakage. This sealing concept is however not working for non-compressible substrates such as PP or ABS, for substrates with considerable contour variations (complex moulds) and for substrates with considerable production tolerances. When applying the new method according to the first aspect of the invention, the known sealing concept can even not be used since it is not possible to apply an inflatable seal in the second mould surface onto which the flowable material for the rigid substrate has to be applied.

An object of a third aspect of the present invention is therefore to provide a backfoaming method wherein a new sealing concept is used which enables to achieve an effective seal, even for substantially non-compressible substrates, and which does not require the presence of an inflatable seal in the second mould surface.

To this end, the method according to the invention is characterised in the third aspect of the invention in that, upon closing the first mould cavity, the flexible skin and the substrate layer are pressed onto one another over a contact zone having a width smaller than 10 mm, preferably smaller than 5 mm, and more preferably smaller than 3 mm, the flexible skin having in said contact zone a thickness of at least 0.3 mm, and preferably of at least 0.4 mm, and the contact zone having preferably a width larger than 1 mm, more preferably larger than or equal to 2 mm.

In practice, the production tolerances of the mould halves are usually smaller than 0.1 mm. It has now been found that, when providing a zone of contact between the rigid substrate and the flexible skin which has a width smaller than 10 mm and wherein the skin has a thickness of at least 0.3 mm, the tolerances of the mould halves can be compensated for by a compression of the flexible skin. When spraying the skin, an upstanding edge is preferably provided on the surface of the first mould half, which upstanding edge has a top surface shaped to enable to spray a layer of the reaction mixture for the skin of at least 0.3 mm on this top surface. In contrast to the known cutting edges, the top surface of the upstanding edge is preferably substantially flat and has a width of at least 1 mm, preferably of at least 2 mm or the top surface is convex and shows an overall curvature radius larger than or equal to 2 mm. The top surface may be smooth or may show a surface relief. It may in particular be undulated or ridged.

The sealing concept of the third aspect of the invention cannot only be applied in direct backfoaming processes but also in conventional backfoaming processes wherein a pre-manufactured skin is applied onto the first mould surface or wherein a thermoplastic foil (such as a PVC, TPU, TPO foil) is applied and thermoformed against the first mould surface to form the flexible skin. In the zone of contact between the rigid substrate and the flexible skin, the first mould surface is preferably heated to weaken the flexible skin.

Other particularities and advantages of the invention will become apparent from the following description of some particular embodiments of the method according to the present invention. This description is only given by way of example and is not intended to limit the scope of the invention as defined by the appended claims. The reference numerals used in this description relate to the annexed drawings wherein:
Figure 1a to 1f illustrate schematically the different steps of a first embodiment of the method according to the invention wherein a flexible skin is sprayed on a first mould half and a rigid substrate on a second mould surface, wherein a foamable material is poured onto the flexible skin before closing the mould and wherein the mould is opened and the trim part demoulded;
Figure 2 is a variant of Figure 1 a illustrating the production of the flexible skin by means of a RIM instead of a spray process;
Figure 3 is a variant of Figure 1b illustrating the production of the rigid substrate by means of a RIM instead of a spray process;
Figure 4 shows on a larger scale a detail of Figure 1 d illustrating the sealing concept between the sprayed skin and the sprayed substrate;
Figures 5 to 7 are the same views as Figure 4 illustrating different embodiments of the sealing concept according to the invention;
Figure 8 is a diagram of a possible transfer line for producing automotive interior trim parts wherein both the flexible skin and the rigid substrate are produced by means of a spray process;
Figure 9 is a diagram of a possible transfer line for producing automotive interior trim parts wherein the flexible skin is produced by means of a spray process and wherein use is made of pre-manufactured rigid substrates;
Figure 10 shows a schematic front view on a door panel containing local glass fibre mats as reinforcement; and
Figure 11 shows a same view as Figure 10 but illustrating a door panel containing metal wires as reinforcement.

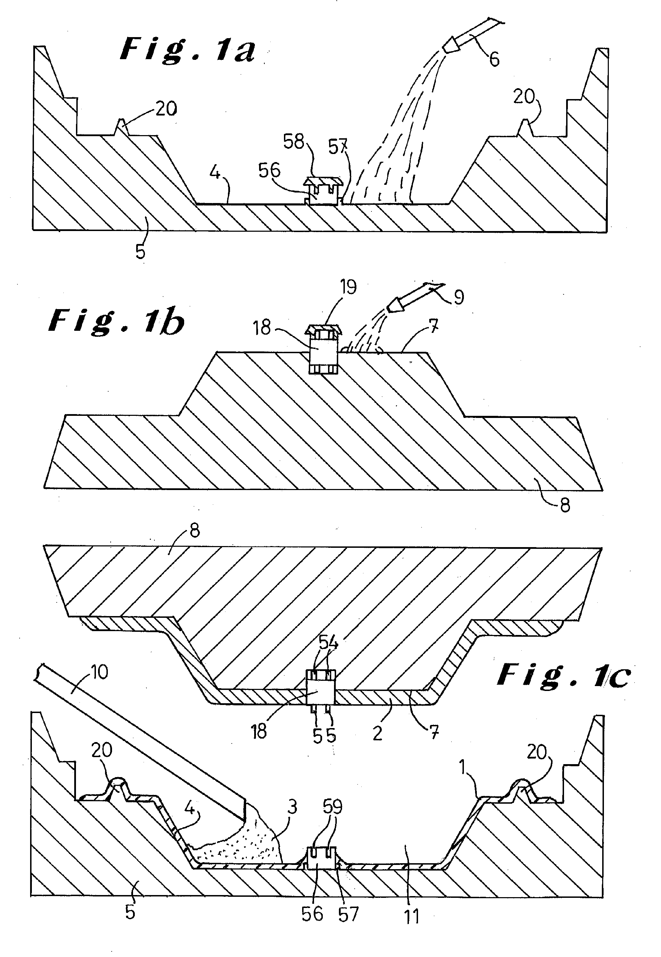

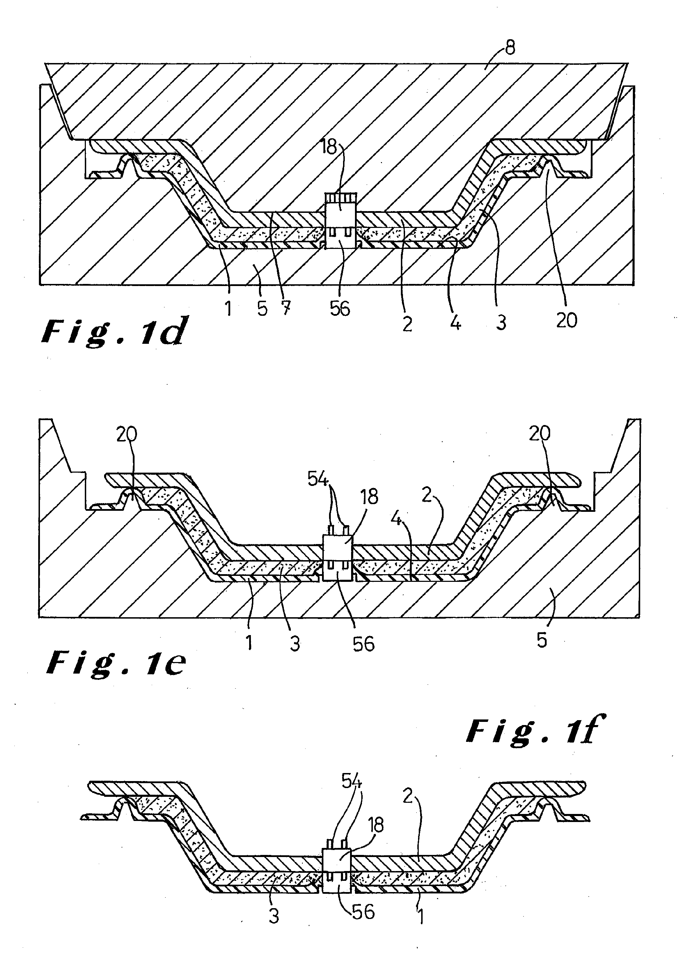

The invention generally relates to a method for manufacturing composite trim parts which, as illustrated for example in Figure 1f, comprise a flexible skin 1, a rigid synthetic backing substrate 2 or carrier and an intermediate layer 3 adhering the flexible skin to the rigid substrate. Such trim parts are usually self-supporting or shape-sustaining and are especially used as automobile interior parts such as dashboards or instrument panels, door panels, consoles, glove compartments, etc. Figure 1

The skin 1 has usually a front side showing a certain texture, such as a leather texture. It may consist of a thermoplastic material such as PVC, TPU, or a TPO. Preference is given however to an elastomeric non-cellular or micro-cellular polyurethane skin made of a liquid polyurethane reaction mixture. The average density of the polyurethane skin is preferably higher than 200 kg/m³, more preferably higher than 400 kg/m³ and most preferably higher than 700 kg/m³. The front surface of the trim part can be formed of this polyurethane material, especially in case it is a lightstable material, but the front surface can also be formed of a paint layer. In the present specification, such a paint layer is not considered as being a part of the flexible skin. It can be applied on the flexible skin by applying it as a so-called in-mould paint on the first mould surface or it can be applied onto the flexible skin after having demoulded the trim part. An additional paint layer does not only enable the use of non-lightstable skin materials but it also enables the production of skins with a lower density. The skin 1 has preferably an average thickness of between 0.1 and 3 mm, more preferably of between 0.2 and 2 mm. The average thickness can be calculated by determining the ratio between the volume of the skin and the surface area thereof. The skin 1 has preferably a flexural modulus, measured according to ASTM D790, lower than 100 MPa, preferably lower than 75 MPa.

The intermediate layer 3 between the skin 1 and the rigid substrate 2 may be made of a curable material which is applied between the skin and the substrate and which simply adheres both layers to one another when it is cured. The intermediate layer is however preferably a foam layer 3 which is situated underneath the skin to provide for a soft touch feeling. Although it can be made of a thermoplastic material, it consists preferably of an open-celled, semi-rigid polyurethane foam layer. The foam layer 3 has preferably an average thickness (which can be calculated in the same way as the average thickness of the skin) of between 1 and 7 mm, more preferably of between 2 and 6 mm, and most preferably of between 3 and 6 mm.

The rigid substrate 2 has preferably a flexural modulus, measured according to DIN EN 310, higher than 100 MPa, preferably higher than 200 MPa and more preferably higher than 300 MPa. It can be made of a thermoplastic synthetic material such as PP, PVC, SMA or ABS or of a thermosetting material such as polyurethane. Alternatively, it can be made of natural fibres embedded in a polyurethane resin. The substrate is usually a non-cellular or micro-cellular material although it is also possible to use a rigid foam as substrate.

Figures 1a to 1f illustrate a first method for manufacturing the automotive interior trim part. In this method the flexible skin 1 is produced on a first mould surface 4 of a first mould half 5 by spraying a liquid polyurethane reaction mixture thereon by means of a spray gun 6 (Figure 1a). The rigid substrate 2 is produced in a similar way by spraying a liquid polyurethane reaction mixture on a second mould surface 7 of a second mould half 8 by means of a spray gun 9 (Figure 1b). Suitable, lightstable reaction mixtures for spraying the skin 1 are disclosed in EP-B-0 379 246. Non-lightstable, aromatic polyurethane reaction mixtures can also be used when an in-mold coating, in particular a water-based or solvent-based paint coating is first applied onto the first mould surface 4. Instead of applying the paint layer as an in-mold coating, the moulded part can also be post-painted. For spraying the rigid carrier, use can be made for example of the "Elastocoat" system of Elastogran described in Example 5 of WO 93/23237 and comprising 100 parts of the polyol component Elastocoat C 6815/65 and 71 parts of the isocyanate component Elastocoat C 6815/65 .

In a next step, illustrated in Figure 1c, a foamable composition for producing the foam layer 3 is poured onto the skin layer 1, by means of a pouring nozzle 10, and the second mould half 8 is positioned on top of the first mould half 5 to close the mould 5, 8. Suitable foamable compositions, in particular polyurethane foam compositions, are disclosed in WO 93/23237. As illustrated in Figure 1d, the foamable composition is allowed to foam in the mould until the mould cavity 11 is entirely filled. When, instead of a foamable composition, a non-foaming curable adhesive material is used, such a material is preferably sprayed over the surface of the skin and/or of the substrate.

After the different layers have cured sufficiently, the upper mould half 8 is removed (Figure 1e) and the trim part is demoulded (Figure 1f).

The trim part illustrated in Figure 1f has no undercuts so that it can easily be demoulded. In case of a trim part which has undercuts, the first and/or the second mould half may comprise slides or may be composed of slides to enable the trim part to be demoulded. In order to avoid visible seams on the front side of the skin, a flexible liner can be used as disclosed in WO 02/26461.

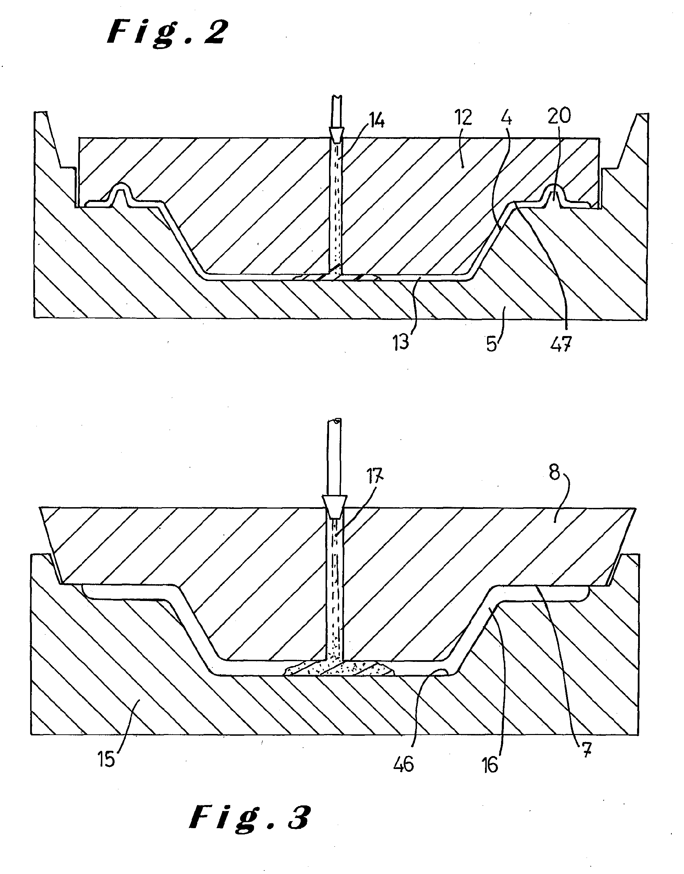

Instead of producing the skin on the first mould surface 4 by means of a spray technique, it can also be produced on this surface by means of an injection technique. As illustrated in Figure 2 a further second mould half 12 is provided which has a further second mould surface 47 and which can be positioned onto the first mould half 5 to define a closed mould cavity 13 having a shape corresponding to the shape of the skin 1. The further second mould half 12 is provided with an injection gate 14 through which the reaction mixture for producing the skin can be injected. Suitable polyurethane reaction mixtures are disclosed for example in WO 98/14492.

Also the rigid substrate can be produced on the second mould surface 7 by means of an injection technique. As illustrated in Figure 3 a further first mould half 15 is provided which has a further first mould surface 46 and which can be placed onto the second mould half 8 to define a closed mould cavity 16 having a shape corresponding to the shape of the substrate 2. The second mould half 8 is now provided with an injection gate 17 through which the reaction mixture for producing the rigid substrate 2 can be injected.

When the rigid substrate is made of a thermoplastic material, the mould illustrated in Figure 3 can also be used for moulding such material either in accordance with an injection moulding process, an injection pressure moulding process (wherein the thermoplastic material is applied in a molten state in the open or partially open mould) or in accordance with a low pressure moulding process (wherein one or more pieces of the thermoplastic material are applied in the open mould so that they are spread over the mould cavity when closing the heated mould). Alternatively, the rigid substrate could be made by a liquid or powder slush moulding technique. In the case of a powder slush moulding technique, the thermoplastic material is applied in a powdery state onto the heated second mould surface and is molten thereon to form the flowable substrate material.

The flexible skin 1 can also be made of a thermoplastic material. In view of the small thickness of the skin, and in order to achieve an accurate positioning of the skin, it is made in the first aspect of the invention according to a slush moulding technique, in particular according to a liquid or a powder slush technique. In case a powder slush technique is used, the powdery thermoplastic material is spread over the heated first mould surface so that it is molten and becomes flowable.

When making the rigid substrate 2 starting from a polyurethane reaction mixture, either by a spray or a RIM process, a reinforcement material is preferably embedded in the polyurethane material to increase the flexural modulus and to improve other characteristics of the substrate. By means of glass fibres and/or glass fibre mats, the flexural modulus of a polyurethane substrate can for example be increased to a value higher than 600 MPa (measured according to DIN EN 310) whilst without a reinforcement, the flexural modulus of a polyurethane substrate is usually lower than 400 MPa.

The reinforced substrate can for example be made in accordance with an S-RIM (Structural RIM, insertion of glass fibre mat), an R-RIM (Reinforced RIM, glass or other fibres admixed into the polyurethane reaction mixture), an LFI (Long Fibre Injection) or a similar process. The reinforcement may consist for example of loose fibres, in particular of glass, metal or other fibres, of a woven or non-woven fibre mat, in particular of a glass fibre mat, of metal wires, of metal sheets or of a combination thereof.

In view of the importance of the weight of interior trim parts of automotive vehicles, the total weight of polyurethane substrate and reinforcement materials should preferably not be higher than the weight of the corresponding rigid substrates made of the known thermoplastic materials. The specific weight of rigid polyurethane is usually lower than that of the thermoplastic materials but the polyurethane substrates have to be thicker and/or have to be reinforced to achieve the required flexural modulus. An important advantage of the use of a liquid polyurethane reaction mixture for making the rigid substrate is that it enables to apply the reinforcement material or materials only locally or to vary the amounts thereof. It is for example possible to combine an S-RIM process, wherein a glass fibre mat is only applied in one or more predetermined areas, with an R-RIM process wherein reinforcement fibres are distributed over the entire rigid substrate. When spraying the reaction mixture, it is possible to blow at the same time fibres in the sprayed reaction mixture. The addition of fibres can be discontinued or reduced in areas where less reinforcement material is needed. In order to avoid deformations of the trim part as a result of large changes, it is for example sufficient to apply the reinforcement material or one of the reinforcement materials in narrow strips. In areas where the trim part is to be fixed to the car body, in particular by means of clips, the rigid substrate can also be reinforced.

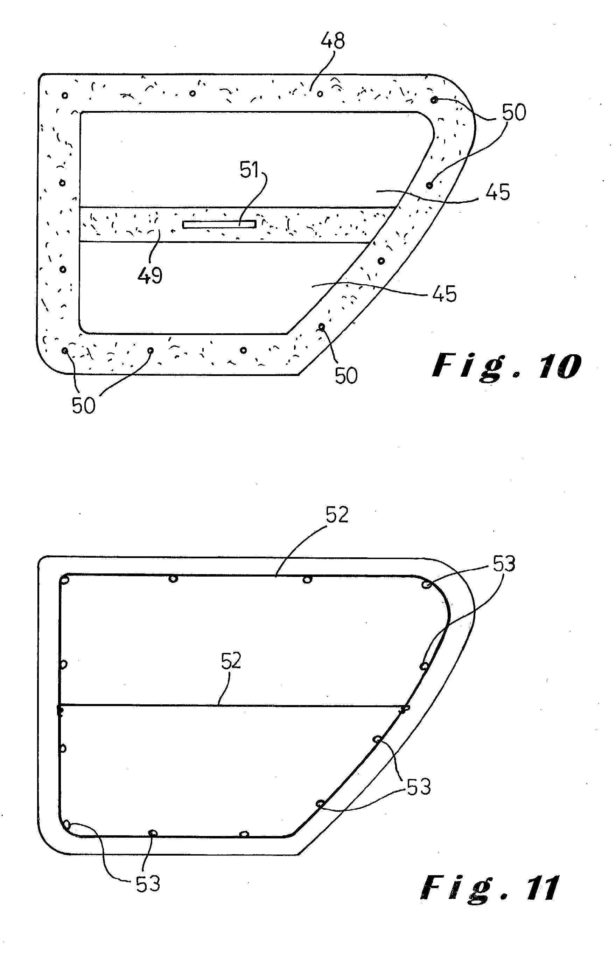

Figure 10 illustrates a first embodiment of a door panel wherein, in a peripheral edge zone 48 and in a central connecting zone 49, glass fibre mats are applied to reinforce the door panel whereas in the remaining zones 45 no reinforcement material is provided. The peripheral edge zone 48 is preferably reinforced in view of the fact that the clips 50 are usually situated therein whilst the central connecting zone 49 is preferably reinforced in view of the fact that it contains the door grip 51. Figure 11 illustrates a variant embodiment of a door panel wherein the peripheral edge zone 48 and the central connecting zone 49 are reinforced by means of a metal wire 52. At the location of the clips, the metal wire 52 is preferably provided with loops 53.

Preferably, the zones or areas which are reinforced more than the other zones or areas, in particular by means of fibres, mats or sheets, cover at the most 90%, more preferably at the most 60% and most preferably at the most 30% of the total surface area of the rigid substrate. Preferably, the reinforced areas cover at least 2%, more preferably at least 4%, of the total surface area of the rigid substrate. It was found that in this way, the total weight of a rigid substrate made of a polyurethane reaction mixture could be kept lower than the weight of a corresponding thermoplastic substrate whilst still meeting the required mechanical properties. A same result can be achieved by embedding one or more wires in the substrate.

A further advantage of the use of a liquid polyurethane reaction mixture for making the rigid substrate is that it enables to integrate or embed electrical and/or mechanical components in the flowable substrate material when producing the rigid substrate. In Figure 1 b an electrical component 18 is positioned in a recess of the second mould surface 7 and is shielded off by means of a mask 19 when spraying the substrate material. In this way, the electrical component is embedded in the substrate material in such a manner that the strength of the rigid substrate is not or less affected than in the prior art methods wherein holes are milled or die cut in the substrate to mount electrical and/or mechanical components in the trim part.

The electrical component 18 illustrated in Figures 1b-1f comprises two electrical connector parts, namely an electrical connector part 54, containing two contact pins, on the back side of the substrate and an electrical connector part 55, containing also two contact pins, on the front side of the substrate.

As disclosed in WO 02/09977 electrical and/or mechanical components can also be integrated in the skin. As can be seen in Figure 1 a, the electrical component 56 integrated in the skin 1 is preferably positioned between upstanding edges 57 on the first mould surface 4 so that the component can easily be positioned and so that an aesthetic transition is formed between the visible skin surface and the electrical component 56. The component is shielded off by means of a mask 58 so that the skin material is only sprayed onto the lateral sides of the electrical component 56.

In order to electrically connect the electrical component 56, it comprises at its back side an electrical connector part provided with two contact holes 59. These holes 59 are arranged to cooperate with the electrical connector pins 55 on the front side of the component 18 which is embedded in the substrate to make an electrical connection, both components 18 and 56 being embedded in such a location that, when closing the mould, the pins 55 are inserted in the holes 59. The electrical connector part 54 on the back side of the component 18 embedded in the rigid substrate is arranged to make an electrical connection when mounting the trim part to the car body or to a further rigid substrate arranged to be fixed to the car body. This further rigid substrate or the car body itself may carry different electrical components such as an electric motor for opening the windows so that the trim part is automatically electrically connected to the electrical components mounted on the car body or on the further rigid substrate. Of course, the car body or the further rigid substrate have then to be provided with a corresponding electrical connector part.

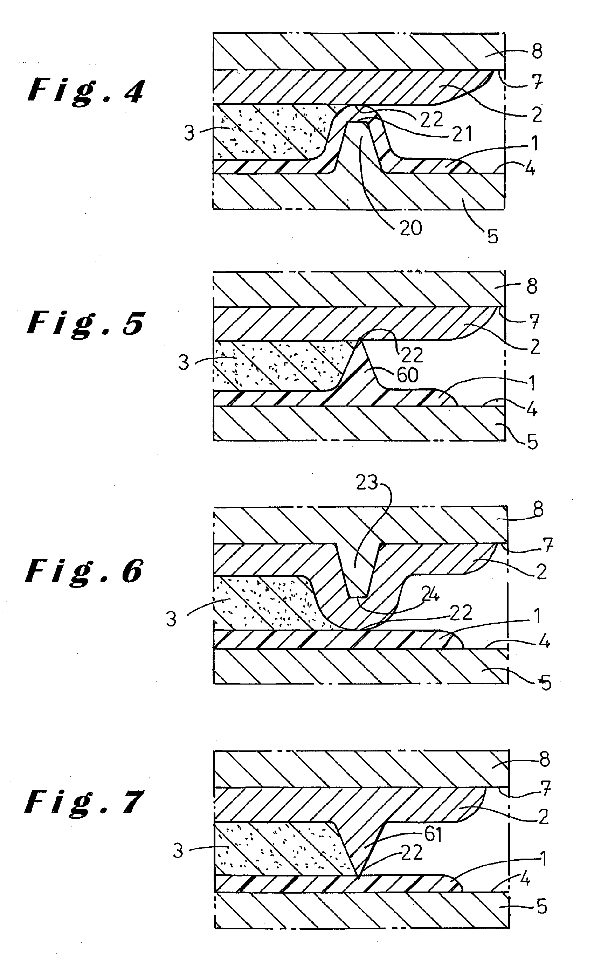

In the method illustrated in Figures 1a to 1f a new sealing concept is used to seal the mould cavity 11 during formation of the intermediate foam layer 3. As shown on a larger scale in Figure 4, the lower mould half 8 is provided along the edge of the mould cavity 11 with an upstanding edge 20 which has, in contrast to the known cutting edges, a top surface 21 enabling to spray a layer of the flowable skin material of at least 0.3 mm on this top surface 21. The top surface 21 is more particularly substantially flat and has a width of at least 1 mm, preferably of at least 2 mm or it is convex and has an overall curvature radius larger than or equal to 2 mm. The width of the top surface 21 is preferably smaller than 5 mm and comprises for example 2 to 3 mm. Optionally, the top surface 21 may show a surface relief such as undulations or grooves provided a sufficiently thick layer of skin material can be sprayed thereon. Due to the resilient nature of the flexible skin material, an effective seal can be obtained between the skin material and the substrate material, even when the dimensions of the mould halves and the thickness of the rigid substrate vary within particular tolerances. More generally, to achieve the new sealing concept, the contact zone 22 between the substrate material and the skin material when the mould 5, 8 is closed should have a width smaller than 10mm, preferably smaller than 5 mm and more preferably smaller than 3 mm so that a relatively large local pressure is exerted when closing to mould enabling to compress the skin material. Moreover, in the contact zone, the skin material should have a thickness of at least 0.3 mm and preferably of at least 0.4 mm. In order to improve the sealing, a thicker layer of skin material could be applied in the contact zone 22 than in the remaining zone of the skin. The above described sealing concept is preferably applied over the entire contact zone but it can also be applied over only a part of the length of the contact zone, preferably over at least 50%, more preferably over at least 70% and most preferable over at least 90% of this length.

When the skin and/or the substrate are made starting from a flowable material, the mould 5, 8 is preferably closed when the skin and/or the substrate material is not completely hardened. In this way not only the skin but also the substrate material can be compressed. Moreover, an effective adhesion between the skin and the substrate can be achieved at the (internal or external) boundaries of the trim part.

In Figure 5 an alternative embodiment is illustrated wherein the skin is made in a closed mould cavity, in particular by a RIM process. In contrast to a spray process, the skin can be given a sharp top and no upstanding edge is needed on the first mould surface. Instead of providing an upstanding edge on the surface of the first mould half, the skin is moulded in such a manner that it shows a ridge 60 having a height sufficient to contact the substrate layer. The use of an upstanding edge is however advantageous in view of the fact that a thinner skin layer can be applied which is cured more quickly. Consequently, even in the contact zone 22 the skin preferably has a thickness smaller than 3 mm.

In Figure 6 a variant embodiment is illustrated wherein the substrate material is sprayed against a second mould surface 7 provided with an upstanding edge 23 having a flat top surface 24 whilst in Figure 7 another embodiment is illustrated wherein the substrate material is moulded in a closed mould cavity to form a substrate ridge 61 having a height sufficient to contact the skin layer. Of course, the upstanding edges 20 or ridges 60 for the skin can be combined with the upstanding edges 23 or ridges 61 for the substrate so that the heights thereof can be reduced.

The sealing concept described hereabove can also be used when manufacturing the flexible skin starting from a thermoplastic foil which is thermoformed onto the first mould surface 4 or when a pre-manufactured skin is positioned onto this first mould surface.

In order to increase the flexibility of the skin in the zone of contact with the rigid substrate, the first mould cavity can be heated to a higher temperature in the area of the contact zone than in the other area or areas. This is especially effective in the case of a thermoplastic skin since this skin can be weakened by heating the mould surface.

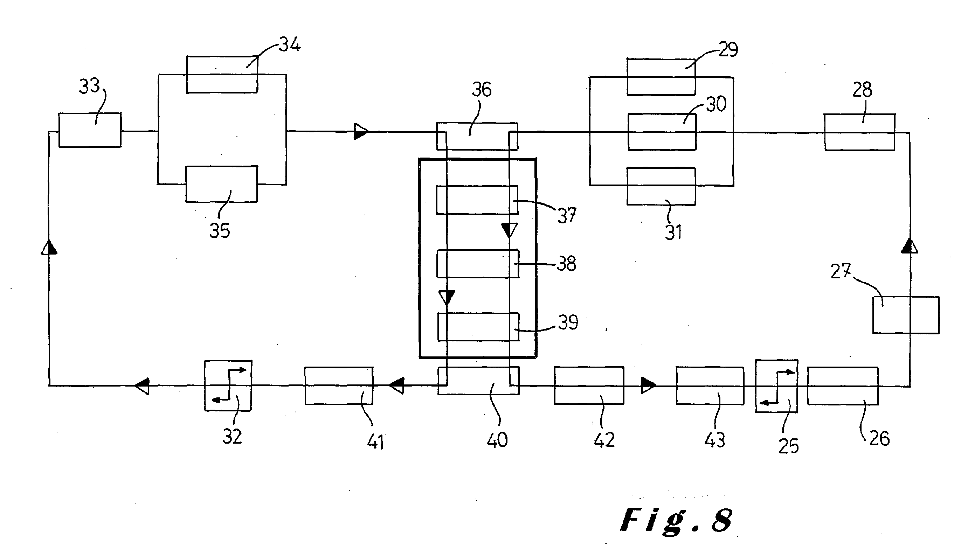

The above described methods for manufacturing a synthetic trim part can be carried out in a continuous line. Figure 8 illustrates a first possible embodiment of a production line wherein both the skin and the substrate are produced by means of a spray process and wherein the first mould half for producing the skin is passed through a first circuit of workstations and the second mould half for producing the rigid substrate through a second circuit of successive workstations. Both the first and the second circuits form a closed loop followed by a number (preferably larger than 2) of first and respectively second mould halves.

The first circuit comprises first of all a workstation 25 for exchanging a first mould half 5 by another first mould half, which may be of a different type or version. In the next workstation 26 the first mould half is cleaned and prepared. Subsequently, an external release agent is sprayed in workstation 27 onto the first mould surface. Then different inserts, such as glass fibre mats, injection moulded elements, electric components etc. can be positioned in workstation 28 onto the first mould surface. In the next three workstations 29-31, the polyurethane reaction mixture for the skin is sprayed. Due to the fact that spraying the skin material requires a relatively large amount of time, the spray booths or stations 29-31 are arranged in parallel to increase the spray capacity.

When the first mould halves pass the workstations 25 to 31 the second mould halves pass similar workstations for producing the rigid substrate by means of a spray process, namely workstation 32 for exchanging the second mould halves, workstation 33 for spraying the external release agent and two spray stations 34 and 35 which are also arranged in parallel.

When the substrate and the skin are sprayed, the first and second mould halves 5 and 8 are fixed in a first common workstation 36 onto a mould carrier which enables to open and close the mould. In a next workstation 37 the foamable material is poured onto the skin and the mould is closed. In the next two workstations 38 and 39 the foam and skin and substrate materials are allowed to cure. In workstation 40 the mould is opened and the first and second mould halves are removed from the mould carrier. The second mould halves are then cleaned in workstation 41 whilst the trim parts on the first mould halves are allowed to cure further in workstation 42 before being demoulded in workstation 43. The mould carrier is returned to workstation 36. This can be done via a separate transfer line or via the transfer line for the first or second mould halves.

An advantage of using such separate transfer lines for the first and second mould halves is that less mould carriers are needed and that smaller weights have to be transported and positioned in the different workstations. Moreover, spraying of the skin is not hampered by the spraying of the substrate.

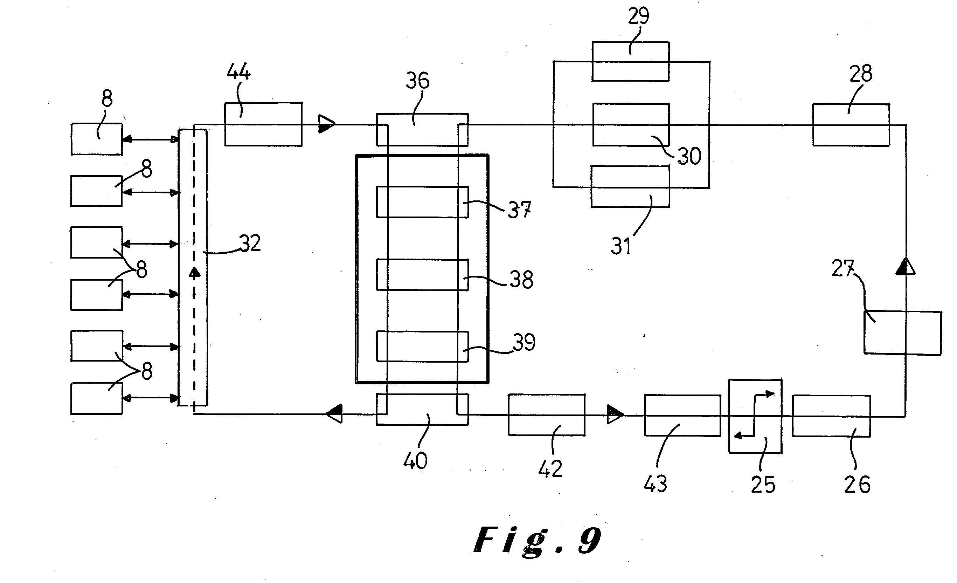

An important advantage is further that the production of the rigid substrate usually takes less time than the production of the flexible skin so that a smaller number of second mould halves are needed. This is especially the case when use is made of pre-manufactured rigid substrates which only have to positioned onto the second mould half. Figure 9 illustrates such a production line. The workstations for producing the skin and the foam layer are identical as in Figure 8. However, only one workstation 44 is required to apply the rigid substrate on the second mould half. Figure 9 also illustrates a battery of six second mould halves 8 which are all of a different type or version. Since the foaming of the foam layer takes only a few minutes whilst the production of the spray skin takes twenty to twenty five minutes, the six different second mould halves are sufficient when the skin is continuously produced by means of fifteen to twenty five first mould halves 5.

## Claims

1. A method for manufacturing a composite trim part which is arranged to be mounted in particular in an automotive vehicle to form a part of the interior thereof and which comprises a flexible skin (1), a rigid backing substrate (2) and an intermediate layer (3), in particular a foam layer, arranged between the flexible skin and the rigid substrate and adhering the flexible skin and the rigid substrate to one another, the method comprising the steps of:
- providing a first mould half (5), having a first mould surface (4), and a second mould half (8), having a second mould surface (7), the first and second mould halves being arranged to cooperate with one another so that the first and second mould surfaces define a first mould cavity (11), and the first and second mould halves being movable with respect to one another to open and close said first mould cavity (11);
- applying at least one flowable skin material onto the first mould surface (4) and allowing this flowable skin material to harden to produce the flexible skin (1) on this first mould surface (4);
- applying said rigid substrate (2) on the second mould surface (7);
- bringing both mould halves (5, 8) together to close the first mould cavity (11), with a gap remaining between the skin (1) on the first mould surface (4) and the substrate (2) on the second mould surface (7);
- applying, either before and/or after having closed the first mould cavity (11), a curable material between the skin (1) on the first mould surface (4) and the substrate (2) on the second mould surface (7), and allowing it to cure in the closed position of the first mould cavity (11) to produce the intermediate layer (3) in said gap, the curable material being in particular a foamable material which is allowed to foam in the closed position of the first mould cavity (11) to produce said foam layer (3); and
- opening the first mould cavity (11) and removing the moulded trim part therefrom,
**characterised in that** said substrate (2) is applied on the second mould surface (7) by applying at least one flowable substrate material onto the second mould surface (7) and allowing this flowable substrate material to harden to produce the rigid substrate (2) on this second mould surface (7).

2. A method according to claim 1, **characterised in that** flowable substrate material comprises a liquid reaction mixture composed to produce a rigid polyurethane substrate (2).

3. A method according to claim 2, **characterised in that** said liquid reaction mixture is sprayed onto the second mould surface (7).

4. A method according to claim 2, **characterised in that** for producing the rigid substrate (2) on the second mould surface (7), a further first mould half (15), having a further first mould surface (46) arranged to cooperate with the second mould surface (7) to define a second mould cavity (16), is provided, and the rigid substrate is produced in this second mould cavity, in accordance with a reaction injection moulding technique, by injecting said reaction mixture in this second mould cavity (16) and allowing it to cure therein, the further first mould half (15) being removed from the second mould half (8) before bringing the first and second mould halves (5, 8) together, with the produced rigid substrate (2) remaining on the second mould surface (7).

5. A method according to claim 1, **characterised in that** the rigid substrate (2) is produced on the second mould surface (7) by applying a thermoplastic substrate material onto the second mould surface, by heating this thermoplastic substrate material and spreading it over the second mould surface, a pressure being in particular exerted onto the heated thermoplastic substrate material to make it flow over the second mould surface.

6. A method according to any one of the claims 1 to 5, **characterised in that** said rigid substrate (2) has a predetermined surface area, at least one reinforcement material being embedded in the rigid substrate, the rigid substrate being divided in at least two zones, in a first one of which (48, 49) the rigid substrate contains a predetermined amount of said reinforcement material whilst, in a second of said zones (45), the rigid substrate does not contain said reinforcement material or a smaller amount thereof, the first zone (48, 49) covering preferably at the most 90%, more preferably at the most 60% and most preferably at the most 30% of said predetermined surface area, the first zone covering more preferably at least 2% and most preferably at least 4% of said predetermined surface area.

7. A method according to any one of the claims 1 to 6, **characterised in that** at least an electrical and/or mechanical component (18) is embedded in the flowable substrate material when producing the rigid substrate (2) on said second mould surface (7), the electrical and/or mechanical component comprising preferably at least one electrical connector part (54, 55), in particular an electrical connector part (54) arranged to make an electrical connection on the back side of the trim part when mounting it.

8. A method according to claim 7, **characterised in that** said electrical and/or mechanical component comprises an electrical connector part (55) on the front side of the substrate and at least a further electrical and/or mechanical component (56), comprising a further electrical connector part (59), is embedded in the flowable skin material when producing the flexible skin (1) on the first mould surface (4), the further electrical connector part (59) being adapted to form an electrical connection with the electrical connector part (55) of the component embedded in the rigid substrate (2), the further electrical and/or mechanical component (56) being embedded in such a location in the flexible skin (1) that, when closing the first mould cavity (11), the further electrical connector part (59) is electrically connected to the electrical connector part (55) of the component embedded in the rigid substrate (2).

9. A method according to any one of the claims 1 to 8, **characterised in that**, for manufacturing the trim part, the first mould half (5) is passed through a first circuit of successive workstations (25-31 and 36-40 and 42-43) and the second mould half (8) through a second circuit of successive workstations (32-41), the first and the second circuit comprising a chain of successive workstations (36-40) which are common to the first and the second circuit and which comprise a first workstation (36), wherein the first and second mould halves are joined to one another, and a last workstation (40), which is situated downstream the first workstation and wherein the first and second mould halves are released from one another, the first circuit comprising further a first chain of successive workstations (25-31 and 42-43), through which the first mould half (5) is passed separated from the second mould half (8), and the second circuit comprising further a second chain of successive workstations (32-35 and 41), through which the second mould part is passed separated from the first mould part, the foam layer being produced in said common chain of workstations (36-40) whilst the flexible skin (1) is produced in said first chain of workstations and the rigid substrate (2) in said second chain of workstations.

10. A method for manufacturing a composite trim part which is arranged to be mounted in particular in an automotive vehicle to form a part of the interior thereof and which comprises a flexible skin (1), a rigid backing substrate (2) and an intermediate layer (3), in particular a foam layer, arranged between the flexible skin and the rigid substrate and adhering the flexible skin and the rigid substrate to one another, the method comprising the steps of:
- providing a first mould half (5), having a first mould surface (4), and a second mould half (8), having a second mould surface (7), the first and second mould halves being arranged to cooperate with one another so that the first and second mould surfaces define a first mould cavity (11), and the first and second mould halves (5, 8) being movable with respect to one another to open and close said first mould cavity (11);
- applying at least one flowable skin material onto the first mould surface (4) and allowing this flowable skin material to harden to produce the flexible skin (1) on this first mould surface (4);
- applying said rigid substrate (2) on the second mould surface (7);
- bringing both mould halves (5, 8) together to close the first mould cavity (11), with a gap remaining between the skin on the first mould surface and the substrate on the second mould surface;
- applying, either before and/orafter having closed the first mould cavity (11), a curable material between the skin (1) on the first mould surface (4) and the substrate (2) on the second mould surface (7), and allowing it to cure in the closed position of the first mould cavity (11) to produce the intermediate layer (3) in said gap, the curable material being in particular a foamable material which is allowed to foam in the closed position of the first mould cavity (11) to produce said foam layer (3); and
- opening the first mould cavity (11) and removing the moulded trim part therefrom,
**characterised in that**, for carrying out said steps, the first mould half (5) is passed through a first circuit of successive workstations (25-31 and 36-40 and 42-43) and the second mould half (8) through a second circuit of successive workstations (44 and 36-41 or 32-41), the first and the second circuit comprising a chain of successive workstations (36-40) which are common to the first and the second circuit and which comprise a first workstation (36), wherein the first and second mould halves are joined to one another, and a last workstation, which is situated downstream the first workstation and wherein the first and second mould halves are released from one another, the first circuit comprising further a first chain of successive workstations (25-31 and 42-43), through which the first mould half (5) is passed separated from the second mould half (8), the foam layer being produced in said common chain of workstations (36-40) whilst the flexible skin is produced in said first chain of workstations, the rigid substrate (2) being either applied on the second mould surface (7) in said common chain of workstations (36-40) or the second circuit of successive workstations comprises, in addition to said common chain of workstations, at least one workstation (44 or 33-35) wherein the rigid substrate is applied on the second mould surface.

11. A method according to claim 10, **characterised in that** said rigid substrate (2) is applied on the second mould surface (7) by positioning a pre-manufactured rigid substrate thereon.

12. A method according to any one of the claims 9 to 11, **characterised in that** said second mould half (8) is passed through the second circuit of successive workstations while the first mould half is being passed through the first circuit of successive workstations.

13. A method according to any one of the claims 9 to 12, **characterised in that** said first circuit forms a first closed loop followed by a first number of first mould halves (5) whilst said second circuit forms a second closed loop followed by a second number of second mould halves (8), said first and second numbers being larger than 1, preferably larger than 2, and said second number being preferably smaller than said first number, said first closed loop of successive workstations comprising preferably at least one workstation (25) for exchanging one first mould half by another first mould half and said second closed loop of successive workstations comprising preferably at least one workstation (32) for exchanging one second mould half by another second mould half.

14. A method according to any one of the claims 1 to 13, **characterised in that** use is made as said flowable skin material of a liquid reaction mixture composed to produce an elastomeric polyurethane skin having an average density higher than 200 kg/m³, preferably higher than 400 kg/m³ and more preferably higher than 700 kg/m³.

15. A method according to claim 14, **characterised in that** said reaction mixture is sprayed onto the first mould surface (4).

16. A method according to claim 14, **characterised in that** for producing the flexible skin (1) on the first mould surface (4), a further second mould half (12), having a further second mould surface (47) arranged to cooperate with the first mould surface (4) to define a third mould cavity (13), is provided, and the flexible skin (1) is produced in this third mould cavity (13), in accordance with a reaction injection moulding technique, by injecting said reaction mixture in this third mould cavity (13) and allowing it to cure therein, the further second mould half (12) being removed from the first mould half (5) before bringing the first and second mould halves (5, 8) together, with the produced flexible skin (1) remaining on the first mould surface (4).

17. A method according to any one of the claims 1 to 13, **characterised in that** the flexible skin (1) is produced against the first mould surface (4) according to a slush moulding technique, in particular according to a liquid or a powder slush moulding technique.

18. A method according to any one of the claims 1 to 17, **characterised in that** the flowable skin material is applied in such an amount that said flexible skin (1) has an average thickness of between 0.1 and 3 mm, and preferably of between 0.2 and 2 mm.

19. A method according to any one of the claims 1 to 18, **characterised in that** upon closing the first mould cavity (11), the flexible skin (1) and the substrate layer (2) are pressed onto one another over a contact zone (22) having a width smaller than 10 mm, preferably smaller than 5 mm, and more preferably smaller than 3 mm, the flexible skin (1) having, before closing the mould, in said contact zone (22) a thickness of at least 0.3 mm, and preferably of at least 0.4 mm, and the contact zone (22) having preferably a width larger than 1 mm, more preferably larger than or equal to 2 mm.

20. A method according to claim 19, **characterised in that** the mould is closed when the skin material and/or the substrate material applied in said contact zone is not completely hardened.

21. A method for manufacturing a composite trim part which is arranged to be mounted in particular in an automotive vehicle to form a part of the interior thereof and which comprises a flexible skin (1), a rigid backing substrate (2) and an intermediate layer (3), in particular a foam layer, arranged between the flexible skin and the rigid substrate and adhering the flexible skin and the rigid substrate to one another, the method comprising the steps of:
- providing a first mould half (5), having a first mould surface (4), and a second mould half (8), having a second mould surface (7), the first and second mould halves being arranged to cooperate with one another so that the first and second mould surfaces define a first mould cavity (11), and the first and second mould halves being movable with respect to one another to open and close said first mould cavity (11);
- applying said flexible skin (1) on the first mould surface (4) and said rigid substrate (2) on the second mould surface (7);
- bringing both mould halves (5, 8) together to close the first mould cavity (11), with a gap remaining between the skin on the first mould surface and the substrate on the second mould surface;
- applying, either before and/or after having closed the first mould cavity (11), a curable material between the skin (1) on the first mould surface (4) and the substrate (2) on the second mould surface (7), and allowing it to cure in the closed position of the first mould cavity (11) to produce the foam layer (3) in said gap, the curable material being in particular a foamable material which is allowed to foam in the closed position of the first mould cavity (11) to produce said foam layer (3); and
- opening the first mould cavity (11) and removing the moulded trim part therefrom,
**characterised in that**, upon closing the first mould cavity (11), the flexible skin (1) and the substrate (2) are pressed onto one another over a contact zone (22) having a width smaller than 10 mm, preferably smaller than 5 mm, and more preferably smaller than 3 mm, the flexible skin (1) having in said contact zone (22), before closing the mould, a thickness of at least 0.3 mm, and preferably of at least 0.4 mm, and the contact zone (22) having preferably a width larger than 1 mm, more preferably larger than or equal to 2 mm.

22. A method according to any one of the claims 19 to 21, **characterised in that** said flexible skin (1) is applied on the first mould surface (4) by spraying a liquid reaction mixture composed to produce an elastomeric polyurethane skin onto the first mould surface (4), the first mould surface being provided in said contact zone (22) with an upstanding edge (20) having a top surface (21) shaped to enable to spray a layer of said reaction mixture of at least 0.3 mm on said top surface, said top surface being in particular substantially flat and having a width of at least 1 mm, preferably of at least 2 mm or said top surface is convex and shows an overall curvature radius larger than or equal to 2 mm.

23. A method according to any one of the claims 19 to 22, **characterised in that** the first mould surface (4) comprises at least two temperature areas, namely a first area, situated outside said contact zone (22), wherein the first mould surface (4) has a predetermined temperature when closing the first mould cavity (11), and a second area, comprising said contact zone (22), wherein the first mould surface (4) is heated to a higher temperature when closing the first mould cavity (11).

24. A method according to any one of the claims 1 to 23, **characterised in that** a trim part is made wherein said flexible skin (1) has a flexural modulus, measured according to ASTM D790, lower than 100 MPa, and preferably lower than 75 MPa, and wherein said rigid substrate (2) has a flexural modulus, measured according to DIN EN 310, higher than 100 MPa, preferably higher than 200 MPa and more preferably higher than 300 MPa.

25. A method according to any one of the claims 1 to 24, **characterised in that** a trim part is made wherein the intermediate layer (3), in particular the foam layer (3), has an average thickness of between 1 and 7 mm, preferably of between 2 and 6 mm, and more preferably of between 3 and 6 mm.
